# FASCICULE DE BREVET EUROPEEN

(11) **EP 2 916 992 B1**
(45) Date de publication et mention de la délivrance du brevet: **28.12.2016**
(21) Numéro de dépôt: 13791853.8
(22) Date de dépôt: 23.10.2013
(51) Int. Cl.: B23K 26/04, B23K 26/14, B23K 26/38

(54) **BUSE LASER AVEC ÉLÉMENT MOBILE INTERNE ET COIFFE EXTERNE, TETE DE FOCALISATION COMPRENANT UNE TELLE BUSE, INSTALLATION LASER COMPRENANT UNE TELLE TETE ; PROCEDE DE COUPAGE PAR FAISCEAU LASER UTILISANT UN DES PRECEDENTS DISPOSITIFS**
LASERDÜSE MIT EINEM INTERN MOBILEN ELEMENT UND EINER EXTERNEN ABDECKUNG, FOKUSKOPF MIT EINER SOLCHEN DÜSE, SYSTEM MIT EINEM SOLCHEN KOPF ; VERFAHREN ZUM LASERSCHNEIDEN MIT EINER DIESER VORRICHTUNGEN
LASER NOZZLE HAVING AN INTERNAL MOBILE ELEMENT AND AN EXTERNAL COVER ; FOCUSING HEAD WITH SUCH NOZZLE, SYSTEM WITH SUCH HEAD ; PROCESS OF LASER CUTTING WITH ONE OF THESE DEVICES

(30) Priorité: 09.11.2012 FR 1260674
(43) Date de publication de la demande: 16.09.2015
(73) Titulaire: L'Air Liquide Société Anonyme pour l'Etude et l'Exploitation des Procédés Georges Claude, 75007 Paris (FR)
(72) Inventeur: JOUANNEAU, Thomas, F-38000 Grenoble (FR); LEFEBVRE, Philippe, F-78250 Meulan (FR)
(74) Mandataire: Pittis, Olivier
(86) Numéro de dépôt international: PCT/FR2013/052535
(87) Numéro de publication internationale: WO 2014/072611

(56) Documents cités:
- EP-A1- 2 130 636
- DE-C1- 19 853 735
- JP-A- H07 251 287
- JP-A- 2003 260 582
- US-A- 4 031 351
- US-A- 5 786 561

## Description

L'invention concerne une buse laser conformément au préambule de la revendication 1 (voir, par exemple, US-A-4,031,351), utilisable en coupage par faisceau laser avec élément mobile interne comprenant une jupe permettant de concentrer le gaz de coupe dans la saignée de coupe et offrant, en outre, une mise en oeuvre au plan industriel ainsi qu'une durée de vie améliorées.

Le coupage par faisceau laser nécessite l'utilisation d'une buse généralement en cuivre ayant pour effet de canaliser le gaz et laisser passer le faisceau laser.

Les buses ont typiquement des diamètres de leur orifice de sortie compris entre 0.5 et 3 mm pour une distance de travail comprise entre 0,6 et 2 mm.

Afin de permettre la découpe, il est nécessaire d'utiliser des pressions élevées, en général de plusieurs bar, dans la tête de focalisation afin de permettre au gaz de rentrer dans la saignée pour chasser le métal en fusion.

Or, une grande partie du gaz utilisée, typiquement entre 50 et 90%, n'a aucune action sur le processus de découpe, c'est-à-dire sur l'expulsion du métal en fusion, car elle part sur les cotés de la saignée de coupe.

Ces pertes de gaz sont en fait dues à l'énorme différence entre la section de passage de l'orifice de buse et la taille de la tâche focale. Ainsi, à titre indicatif, la section de passage d'une buse avec orifice de sortie de diamètre égal à 1.5 mm est 25 fois plus importante que la section de la tache focale créée par le faisceau laser traversant cette buse.

Or, si une proportion insuffisante de gaz est mise en oeuvre, on assiste alors à l'apparition de défauts de coupe, en particulier des bavures adhérentes et/ou des traces d'oxydation.

Tenter d'y remédier en réduisant le diamètre de l'orifice de la buse n'est pas idéal car on prend alors le risque de voir le faisceau laser venir frapper l'intérieur de la buse et la détériorer, ce qui par ailleurs détériore également la qualité de coupe et/ou les performances.

Il existe par ailleurs un certain nombre de documents proposant diverses solutions pour tenter de favoriser l'entrée du gaz dans la saignée, par exemple EP-A-1669159, JP-A-62006790, JP-A-61037393, JP-A-63108992, JP-A-63040695 et US-A-4,031,351.

Or, aucune de ces solutions n'est vraiment idéale car souvent d'architecture complexe à mettre en oeuvre, d'encombrement supérieur à celui d'une buse classique, et/ou présentant une efficacité limitée.

Notamment, le document US-A-4,031,351 divulgue une buse de coupage laser comprenant un élément mobile dont l'extrémité est plaquée par un ressort contre la surface de la pièce à découper pour favoriser l'injection du gaz de coupe dans la saignée.

L'inconvénient majeur de cette solution réside dans le fait que la force exercée par le ressort en direction de la tôle, cumulée à la pression du gaz de coupe, conduit l'élément mobile à exercer un effort important sur la tôle à couper. Il s'ensuit un risque de déformation, de rayure, voire d'entraînement de la tôle, laquelle est en général simplement posée sur la table de la machine industrielle de découpe.

Pour y remédier, il a été proposé dans la demande de brevet français n° 1154224, déposée le 16 mai 2011, d'agencer un élément mobile dans le corps d'une buse laser. Cet élément mobile est apte à se déplacer axialement dans ledit corps, sous l'effet d'une pression gazeuse, et ce en direction de la surface de la tôle à découper. Il s'ensuit un rapprochement de l'élément mobile de la surface supérieure de la tôle à couper qui vient en contact de la tôle, formant ainsi une jupe par laquelle le gaz de coupe est concentré au niveau de la saignée, ce qui force le gaz à y entrer et améliore son efficacité.

En outre, cette buse comprend un élément élastique exerçant une force de rappel élastique sur l'élément mobile dans un sens tendant à l'éloigner de la tôle. Ainsi, lorsque le gaz est coupé, l'élément mobile peut être rappelé dans sa position de repos et donc la jupe rentrer à l'intérieur du corps de buse.

Toutefois, cette solution continue de poser certains problèmes, notamment dans le cadre d'un usage industriel.

Ainsi, les machines industrielles de découpe laser et les têtes de focalisation laser associées mettent en oeuvre, de façon connue en soi, un système de capteur de distance capacitif pour assurer un déplacement de la tête de focalisation à une distance constante au-dessus de la tôle à découper.

Ce système utilise l'effet capacitif pour détecter de faibles variations de distance entre deux éléments conducteurs formant un condensateur. La distance séparant les deux éléments conducteurs est déterminée en mesurant la capacité électrique de ce condensateur, qui dépend notamment de la permittivité diélectrique du milieu qui les sépare.

Une machine de découpe est généralement munie d'une buse laser traditionnelle formée d'un matériau électriquement conducteur tel du cuivre. Lorsque la buse est montée à l'extrémité de la tête, elle est reliée électriquement au système de capteur capacitif. De la sorte, le capteur capacitif peut mesurer la capacité électrique entre la tôle et la surface plane de la buse située en regard de la tôle.

Le capteur capacitif est lui-même relié électriquement aux commandes de déplacements de la tête de focalisation de manière à ajuster le positionnement en hauteur de la tête en cas de variations de la capacité mesurée ou à stopper le déplacement de la tête en cas de contact entre la buse et la tôle.

Ce système de capteur capacitif permet d'assurer des performances de coupe constantes, en termes de vitesse et qualité de coupe, en maintenant le point de focalisation du faisceau laser à une position constante par rapport à la surface de la tôle. Il permet aussi de déclencher l'arrêt de la machine en cas d'obstacles présents sur la tôle.

Il est donc indispensable de ne pas perturber son fonctionnement.

Or, l'utilisation d'une buse laser à élément mobile tel que décrite dans la demande de brevet français n° 1154224 est difficilement compatible avec un tel système.

En effet, l'élément mobile de la buse forme une jupe en contact avec la tôle à découper. Pour garantir sa résistance à la chaleur dégagée par le procédé de découpe ainsi qu'aux projections de métal fondu, l'élément mobile peut être formé d'un matériau métallique tel du cuivre, du laiton ou analogue.

Toutefois, l'élément mobile métallique est alors à la fois en contact avec la tôle, c'est-à-dire au même potentiel électrique que celle-ci, et en contact avec les parois internes du corps de buse, formé lui aussi d'un matériau électriquement conducteur. Il faut donc désactiver le capteur capacitif pour éviter une mise en défaut de la machine de coupage.

Une solution pour autoriser le fonctionnement du capteur capacitif de la machine serait d'utiliser un élément mobile formé d'un matériau isolant électriquement. Mais cette solution n'est pas idéale car les matériaux isolants électriquement sont en général peu résistants à la forte chaleur dégagée par le procédé de découpe, aux projections de métal en fusion et/ou aux chocs thermiques.

Le problème qui se pose est dès lors de pallier tout ou partie des inconvénients susmentionnés, en proposant notamment une buse laser dont la robustesse, la durée de vie et la mise en oeuvre au plan industriel sont grandement améliorée par rapport aux solutions existantes et qui ne perturbe pas, ou nettement moins que dans l'art antérieur, le fonctionnement d'un système de capteur de distance capacitif équipant une machine de découpe industrielle.

La solution de la présente invention est alors une buse laser telle que définie dans la revendication 1, et comprenant:
- un corps de buse comprenant un premier logement axial comprenant un premier orifice de sortie situé au niveau d'une face avant du corps de buse,
- un élément mobile agencé dans le premier logement axial du corps de buse, comprenant une partie avant formant jupe et un passage axial avec un deuxième orifice de sortie débouchant au niveau de ladite partie avant formant jupe, l'élément mobile étant apte à se déplacer en translation dans le premier logement axial en direction du premier orifice de sortie sous l'effet d'une pression gazeuse s'exerçant sur l'élément mobile, et
- un élément élastique agencé dans le premier logement axial, entre le corps de buse et l'élément mobile, ledit élément élastique exerçant une force de rappel élastique sur l'élément mobile tendant à s'opposer au mouvement de translation dans le premier logement axial en direction du premier orifice de sortie,
et elle comprend en outre une coiffe externe formant manchon autour de tout ou partie du corps de buse.

Selon le cas, la buse de l'invention peut comprendre l'une ou plusieurs des caractéristiques techniques suivantes :
- la coiffe externe comprend une première paroi périphérique et le corps de buse comprend une deuxième paroi périphérique, les dites première et deuxième parois périphériques étant en tout ou partie en contact ou espacées l'une de l'autre.
- l'élément mobile est apte à se déplacer en translation dans le premier logement axial en direction du premier orifice de sortie jusqu'à ce que la partie avant fasse saillie à l'extérieur dudit premier logement axial au travers du premier orifice de sortie.
- la coiffe externe comprend un deuxième logement axial comprenant un troisième orifice de sortie situé au niveau d'une face avant de ladite coiffe externe, ledit troisième orifice de sortie débouchant en amont dudit deuxième orifice de sortie du passage axial de l'élément mobile lorsque la partie avant fait saillie à l'extérieur du premier logement axial.
- le corps de buse est formé d'un matériau isolant électriquement et la coiffe externe est formé d'un matériau conducteur électriquement.
- l'élément mobile est apte à se déplacer entre plusieurs positions comprenant :
   - une position de repos dans laquelle la partie avant de l'élément mobile est totalement ou quasi-totalement rentrée dans le logement axial, et
   - une position de travail dans laquelle la jupe de la partie avant de l'élément mobile fait totalement ou quasi-totalement saillie à l'extérieur du logement axial, au travers du premier orifice de sortie.
- au moins un élément d'étanchéité est agencé entre le corps de buse et l'élément mobile, par exemple un ou plusieurs joints toriques.
- ledit au moins un élément d'étanchéité est agencé dans une gorge périphérique aménagée dans la paroi périphérique externe de l'élément mobile.
- le passage axial de l'élément mobile a un profil de forme conique, tronconique ou convergente/divergente.
- le corps de buse est en un matériau isolant électriquement, en particulier céramique technique isolante électriquement, par exemple du type Al₂O₃, AIN, ZrO₂ ou Al₂TiO₅, un matériau polymère, par exemple du polyétheréthercétone (Peek) ou Vespel ®, de céramique électriquement isolante ou de pyrex.
- la coiffe externe est formée d'un matériau conducteur électriquement, par exemple un matériau métallique, tel de l'acier, du bronze, de l'acier réfractaire, du cuivre, du laiton, ou un matériau céramique électriquement conducteur.
- l'élément mobile est formé en tout ou en partie d'un matériau conducteur électriquement, par exemple un matériau métallique, tel de l'acier, du bronze, de l'acier réfractaire, du cuivre, du laiton, ou un matériau céramique électriquement conducteur. De préférence, l'élément mobile est formé d'un matériau électriquement conducteur qui induise un frottement limité sur la tôle pour limiter une usure de la tôle.
- de manière alternative, l'élément mobile est en un matériau isolant électriquement, de préférence résistant à la température/chaleur, en particulier une céramique technique isolante électriquement, par exemple du type Al₂O₃, AIN, ZrO₂ ou Al₂TiO₅, un matériau polymère, par exemple du polyétheréthercétone (Peek) ou Vespel ®, de céramique électriquement isolante ou de pyrex.

L'invention porte également sur une tête de focalisation laser comprenant au moins une optique de focalisation, par exemple une ou plusieurs lentilles ou miroirs, notamment une lentille de focalisation et une lentille de collimation, et elle comporte en outre une buse laser selon l'invention.

Avantageusement, la tête de focalisation selon l'invention, comporte en outre un système de capteur capacitif, la coiffe externe de la buse étant reliée électriquement audit système de capteur capacitif.

Par ailleurs, l'invention concerne aussi une installation laser comprenant un générateur laser, une tête de focalisation laser et un dispositif de convoyage de faisceau laser relié audit générateur laser et à ladite tête de focalisation laser, et la tête de focalisation laser est selon l'invention.

De préférence, le générateur ou source laser est de type CO₂, YAG, à fibres ou à disques, de préférence à fibres ou à disques, notamment une source laser à fibres d'ytterbium.

Selon encore un autre aspect, l'invention a également trait à un procédé de coupage par faisceau laser d'une pièce métallique, dans lequel on met en oeuvre une buse selon l'invention, une tête de focalisation laser selon l'invention ou une installation selon l'invention.

De préférence, au cours du procédé de coupage selon l'invention, la distance entre la pièce métallique coupée et la tête de focalisation est ajustée à partir d'une ou plusieurs valeurs de capacité électrique mesurées entre la coiffe externe et la pièce métallique.

L'invention va maintenant être mieux comprise grâce à la description suivante faite en références aux Figures annexées parmi lesquelles :
- la Figure 1A schématise une tête de focalisation d'une installation de coupage laser classique,
- la Figure 1B schématise la taille du spot laser par rapport à la taille de l'orifice de buse,
- la Figure 2A est un schéma en coupe du corps d'une buse selon un mode de réalisation de l'invention,
- la Figure 2B est un schéma en coupe d'une buse selon un mode de réalisation de l'invention sans qu'un élément mobile y soit agencé,
- la Figure 3 est une vue en trois dimension d'une buse selon un mode de réalisation de l'invention, et
- les Figures 4A et 4B montrent la buse de l'invention avec l'élément mobile dans deux positions différentes.

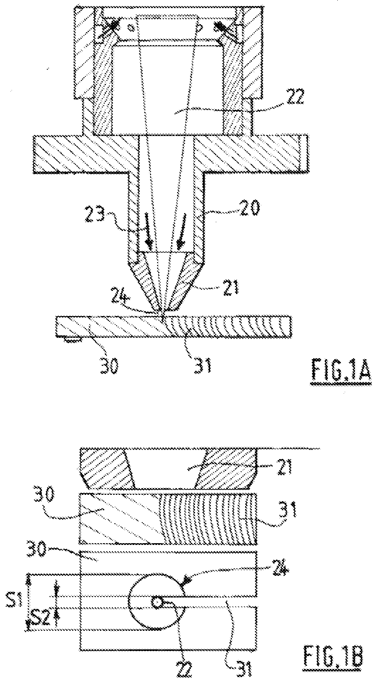

La Figure 1A représente la tête de focalisation 20 d'une installation de coupage laser classique, auquel est fixée une buse laser 21 classique qui est traversée par un faisceau laser focalisé et par du gaz d'assistance (flèche 23) servant à expulser le métal fondu par le faisceau hors de la saignée 31 de coupe formée par le faisceau 22 dans la pièce métallique à couper 30, par exemple une tôle en acier ou en acier inoxydable.

Le gaz d'assistance peut être un gaz actif, tel de l'oxygène, de l'air, du CO₂, de l'hydrogène, ou un gaz inerte, tel l'argon, l'azote, l'hélium, ou un mélange de plusieurs ces gaz actifs et/ou inertes. La composition du gaz est choisie notamment en fonction de la nature de la pièce à couper.

Le faisceau qui vient impacter la pièce va y fondre le métal qui sera expulsé en-dessous de la pièce par la pression du gaz d'assistance.

La Figure 1B permet de bien visualiser la section S1 de passage de l'orifice 24 de la buse 21 par rapport à la taille S2 de la tâche focale du faisceau 22. Comme on le voit, la section S1 est très supérieure à la taille S2 de la tâche focale du faisceau 22, ce qui engendre, avec les buses classiques, une consommation élevée de gaz d'assistance dont seulement une faible proportion va servir à expulser le métal fondu hors de la saignée de coupe 31.

Pour réduire considérablement la consommation de gaz ainsi que la pression nécessaire à la découpe, il a été proposé dans la demande de brevet français n° 1154224 une buse laser apte à et conçue pour couper avec un faisceau laser en mettant en oeuvre un débit de gaz et/ou une pression de gaz réduits grâce à une architecture de buse particulière permettant de forcer une proportion plus importante de gaz à rentrer dans la saignée 31 et à y expulser efficacement le métal fondu, et ce, quelle que soit la puissance laser ainsi et la longueur d'onde du faisceau.

Selon le document FR n°1154224, la buse laser comprend un corps 1 de buse coopérant avec un élément mobile 2 agencé et façon mobile à l'intérieur du corps 1 de la buse. Le corps 1 de buse est avantageusement formé d'un matériau conducteur, de préférence du cuivre, et l'élément mobile 2 peut être soit isolant électriquement, soit conducteur électriquement.

A noter que dans le cadre de la présente invention, on entend par matériau électriquement isolant, ou matériau diélectrique, un matériau qui ne conduit pas l'électricité, c'est-à-dire qui interdit le passage de courant électrique entre deux éléments conducteurs électrique. A l'inverse, un matériau conducteur électriquement contient de nombreux porteurs de charge électrique pouvant se déplacer facilement sous l'action d'un champ électromagnétique.

Toutefois, aucune de ces solutions n'est idéale, et ce pour les raisons déjà mentionnées. D'une part, les matériaux électriquement isolant, tels les matériaux plastiques ou analogue, ne sont pas appropriés car peu résistants aux fortes températures, typiquement de 1000 à 2000 °C, rencontrées au voisinage de la saignée de découpe et/ou trop abrasifs envers la surface de la tôle. D'autre part, utiliser un matériau électriquement conducteur impose de désactiver le capteur capacitif, ce qui nuit à la fiabilité et aux performances du procédé de découpe.

Pour remédier à cela, la présente invention propose une buse laser améliorée de manière à permettre à un capteur capacitif de détecter la surface de la tôle à couper et d'ajuster la position de la tête de focalisation par rapport à ladite surface.

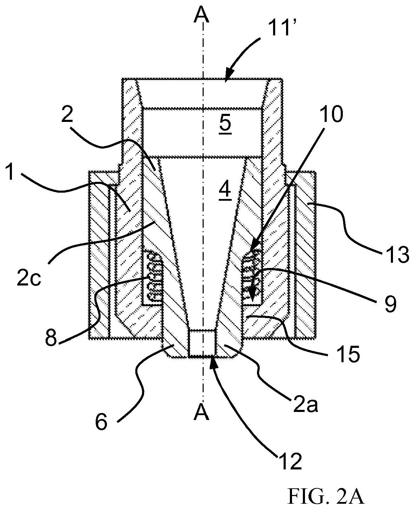

Comme on le voit sur la Figure 2A, la buse de l'invention se distingue en ce qu'elle comprend trois composants essentiels, à savoir un corps 1 de buse, un élément mobile 2 et une coiffe externe 13 formant manchon autour de tout ou partie du corps 1 de buse.

Avantageusement, le corps 1 de buse, de première paroi périphérique 1c, est une pièce de révolution traversée de part en part par un premier logement axial 5 d'axe AA qui s'étend depuis la face arrière 1b du corps 1 jusqu'à la face avant 1a dudit corps 1. Le premier logement axial 5 débouche au niveau des deux faces avant 1a et arrière 1b du corps 1 de buse. La face arrière 1b porte donc un premier orifice d'entrée 11', alors que la face avant 1a porte un premier orifice de sortie 11 du corps de buse 1, les premiers orifices d'entrée 11' et de sortie 11 étant coaxiaux d'axe AA.

Ce premier logement axial 5 est en fait un évidement, par exemple de forme cylindrique comprenant un premier épaulement 9 interne se projetant radialement vers le centre du premier logement 5, ledit premier épaulement interne 9 étant formé par une restriction de la section du logement axial 5 au niveau du premier orifice de sortie 11 située en face avant 1a du corps 1 de buse. De préférence, le premier épaulement interne 9 est aménagé au niveau du fond 15 dudit logement axial 5.

La buse comprend par ailleurs un élément mobile 2 venant s'insérer dans le premier logement 5 du corps 1 de buse, de préférence coaxialement au corps 1, comme visible en

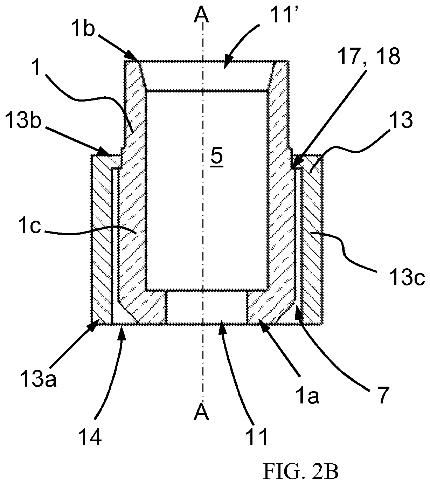

Figure 2. Cet élément mobile 2 est apte à et conçu pour se déplacer en translation selon l'axe AA à l'intérieur du premier logement 5 du corps 1 de buse, en direction du premier orifice de sortie 11.

La paroi périphérique 2c de l'élément mobile 2 comprend avantageusement une première butée 10 agencée au niveau de la surface externe en regard dudit épaulement 9. De préférence, la première butée 10 est de forme annulaire et s'étend sur tout ou partie de la périphérie de l'élément mobile 2.

Cet élément mobile 2 comprend une partie avant 2a formant une jupe 6 de forme cylindrique, c'est-à-dire tubulaire, agencée dans le premier logement axial 5 du corps de buse 1 et comprenant un passage axial 4 avec un deuxième orifice de sortie 12 débouchant au niveau de la partie avant 2a formant ladite jupe 6.

Le passage axial 4 peut avoir un profil interne conique, avec canal de sortie cylindrique ou non, tronconique, de type convergent/divergent (i.e. tuyère de Laval) ou toute autre géométrie adaptée. De préférence, le diamètre du deuxième orifice de sortie 12 est compris entre 0.5 et 5 mm.

Pendant l'utilisation de la buse, le faisceau laser 22 et le gaz d'assistance 23 traversent le passage axial 4 de l'élément mobile 2 et ressortent par le deuxième orifice de sortie 12 débouchant au niveau de la partie avant 2a formant ladite jupe 6

L'élément mobile 2 est déplaçable axialement par rapport au corps 1 de la buse selon l'axe AA. En fait, l'élément mobile 2 se déplace sous l'effet de la pression du gaz d'assistance 23 qui vient s'exercer sur ledit élément mobile 2, ce qui tend à le pousser en direction de la pièce à couper 30. Avantageusement, l'élément mobile 2 est apte à se déplacer en translation jusqu'à ce que la partie avant 2a vienne faire saillie à l'extérieur du premier logement 5, au travers du premier orifice de sortie 11.

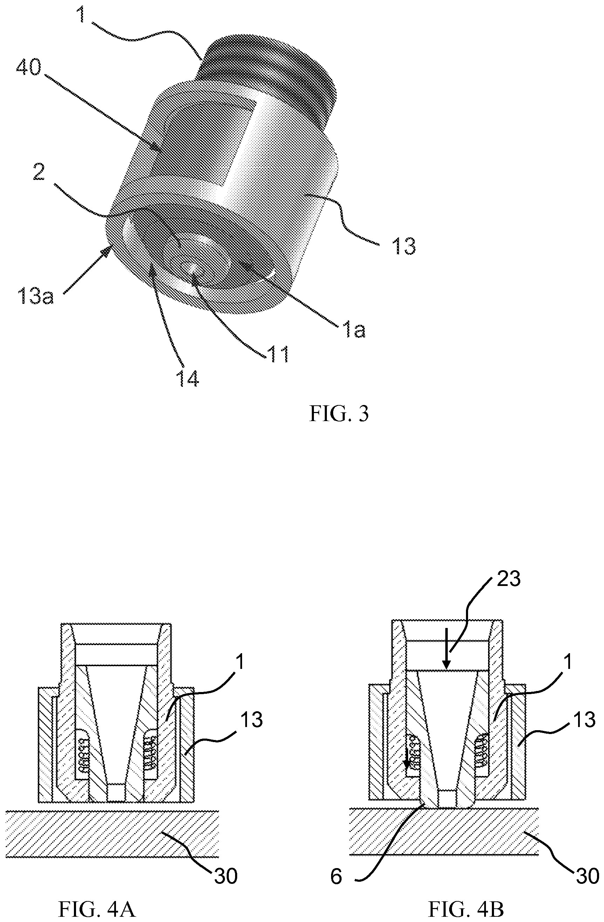

Le déplacement en translation selon l'axe AA de l'élément mobile 2 va provoquer le rapprochement de la jupe 6 de la surface supérieure 30 de la tôle à couper, qui vont venir en contact l'une de l'autre, comme illustré en Figure 4B.

Ainsi, le gaz va être canalisé par la jupe 6 et se trouver concentré au niveau de la tâche laser et donc de la saignée, ce qui va grandement améliorer son efficacité et l'expulsion du métal se fera mieux.

Conformément à l'invention, une coiffe externe 13 est agencée autour de tout ou partie du corps 1 de buse. En fait, la coiffe externe 13 comprend un deuxième logement axial 7 dans lequel le corps (1) de buse est agencé au moins partiellement.

Avantageusement, la deuxième paroi périphérique 13c et le deuxième logement axial 7 de la coiffe externe 13 sont de forme générale cylindrique. Le deuxième logement axial 7 comprend un deuxième épaulement interne 17, de préférence aménagé au niveau de l'extrémité amont de la coiffe 13.

Dans le cadre de l'invention, les termes amont et aval sont définis par rapport au sens d'écoulement du gaz de coupe dans la buse laser, c'est-à-dire de l'orifice d'entrée 11' de l'élément mobile 2 en direction de l'orifice de sortie 11 dudit élément mobile 2.

La paroi périphérique externe 1c du corps 1 de buse comprend une deuxième butée 18 agencée en regard dudit deuxième épaulement interne 17, ladite deuxième butée 18 permettant un maintien de la coiffe externe 13 autour du corps 1 de buse.

Les dites première et deuxième parois périphériques 1c et 13c de la coiffe externe 13 et du corps 1 de buse peuvent être en tout ou partie en contact ou espacées l'une de l'autre. Sur la Figure 2, un espace est aménagé entre les première et deuxième parois 1c et 13c. Typiquement, une distance de l'ordre de quelques mm sépare les dites première et deuxième parois périphériques 1c et 13c.

Avantageusement, la coiffe externe 13 comprend un deuxième logement axial 7 comprenant un troisième orifice de sortie 14 situé au niveau d'une face avant 13a de ladite coiffe externe 13. La coiffe externe 13 comprend en outre une face arrière 13b située du côté opposé à la face avant 13a de la coiffe 13.

De préférence, la deuxième paroi périphérique 13c de la coiffe externe 13 s'étend au moins jusqu'à la face avant 1a du corps 1 de buse et autour de ou partie de la périphérie dudit corps 1 de buse. Elle peut être pleine ou comprendre une portion ajourée 40, comme montré en figure 3, ce qui avantageux lorsque l'on souhaite réduire le poids de la coiffe externe 13.

Avantageusement, ledit troisième orifice de sortie 14 de la coiffe 13 peut déboucher au niveau, en amont ou en aval de la face avant 1a du corps 1 de buse. De préférence, la coiffe 13 est conçue de sorte que ledit troisième orifice de sortie 14 débouche en amont dudit deuxième orifice de sortie 12 du passage axial 4 de l'élément mobile 2 lorsque la partie avant 2a fait saillie à l'extérieur du premier logement axial 5.

Le corps 1 de buse, la coiffe externe 13 et l'élément mobile 2 sont de préférence des pièces de révolution agencées coaxialement les unes aux autres, de préférence formée d'un bloc de matériau.

Le corps 1 de buse est destiné à venir se fixer sur la tête de focalisation laser 20 de l'installation laser. Il est formé d'un matériau électriquement conducteur dans les buses classiques. Toutefois, selon l'invention, il est formé de préférence d'un matériau isolant électriquement, composite ou non, tel une céramique technique, un polymère, par exemple du polyétheréthercétone (Peek), Vespel ®, ou du pyrex.

L'élément mobile 2 peut être formée d'un matériau isolant ou conducteur électriquement. Toutefois, l'élément mobile 2 est de préférence formé d'un matériau conducteur électrique. Ce type de matériau offre en effet une résistance plus grande aux fortes températures ainsi qu'au chocs, mécaniques et/ou thermiques. Ce matériau conducteur électriquement peut être un matériau métallique, par exemple de l'acier, du bronze, de l'acier réfractaire, du cuivre, du laiton, ou un matériau céramique électriquement conducteur. De préférence, l'élément mobile est formé d'un matériau électriquement conducteur qui induit un frottement limité sur la tôle pour limiter une usure de la tôle, c'est-à-dire un matériau peu ou pas abrasif.

La coiffe externe 13 est avantageusement formée d'un matériau conducteur électriquement, par exemple un matériau métallique, tel de l'acier, du bronze, de l'acier réfractaire, du cuivre, du laiton, ou un matériau céramique électriquement conducteur.

On comprend alors que la buse de l'invention offre l'avantage d'être compatible avec les systèmes de capteur capacitif, tout en mettant en oeuvre un élément mobile formé d'un matériau électriquement conducteur, plus résistant et plus adapté à un positionnement au voisinage d'une saignée de découpe laser, ce qui n'était pas possible avec les buses à élément mobile selon l'art antérieur.

En effet, en condition d'utilisation, le corps 1 de buse est montée à l'extrémité d'une tête de focalisation qui est située en regard de la tôle à couper. Avantageusement, cette tête de focalisation comprend, de façon connue en soi, un système de capteur capacitif. Typiquement, le corps 1 de buse comprend des moyens d'assemblage dudit corps 1 à la tête de focalisation 20, par exemple un filetage tel qu'illustré en Figure 3.

Avantageusement, lorsque la buse laser selon l'invention est assemblée à la tête de focalisation, la coiffe externe 13 est conformée de manière à ce qu'au moins une portion de la surface externe de ladite coiffe, préférence au moins une portion de la face arrière 13b, soit reliée électriquement au système de capteur capacitif équipant la tête. Avantageusement, cette liaison électrique s'effectue par contact de la au moins une portion de surface de la coiffe externe 13 avec une pièce de la tête formée d'un matériau électriquement conducteur faisant partie du système de capteur capacitif.

L'élément mobile 2 électriquement conducteur se met en contact avec la tôle et donc au même potentiel électrique que celle-ci. Ceci ne perturbe pas le capteur capacitif puisque le corps 1 de buse, en contact avec l'élément mobile 2, est en un matériau isolant électrique.

Le capteur capacitif reste opérationnel et mesure une ou plusieurs valeurs de capacité électrique entre la coiffe externe 13, de préférence la face avant 13a de la coiffe 13, et la surface supérieure de la pièce à couper. A partir de ces valeurs, le capteur permet d'ajuster la distance entre la coiffe et la tôle à une valeur constante ou quasi-constante, typiquement entre 0,1 et 5 mm, de préférence entre 0,5 et 2 mm, et de corriger les défauts de planéité de la tôle. Le capteur permet aussi d'éviter la collision avec une pièce déjà découpée, mais restée coincée dans le squelette de découpe, en déclenchant une remontée de la tête de focalisation ou un arrêt de la machine de coupage.

De la sorte, la face avant 13a de la coiffe externe 13 en matériau conducteur électrique, et de là la tête de focalisation, peut être maintenue à une hauteur maintenue constante par le capteur capacitif, comme c'est le cas avec une buse standard en cuivre sans élément mobile interne.

En outre, que l'élément mobile 2 soit en contact avec la tôle ou pas, les valeurs de capacités électriques mesurées entre la coiffe externe 13 et la tôle restent inchangées. Le remplacement d'une buse laser classique par une buse selon l'invention dans une installation industrielle de découpe laser est donc totalement transparent vis-à-vis du système de capteur capacitif équipant la tête de focalisation et l'installation de découpe laser existante.

Selon l'invention, un élément élastique 8, tel un ressort, est agencé dans le premier logement axial 5, entre le corps de buse 1 et l'élément mobile 2 de manière à exercer une force de rappel élastique sur l'élément mobile 2 dans un sens tendant à l'éloigner de la pièce à couper. Ainsi, en fin de coupe, lorsque le gaz est coupé et que la pression gazeuse cesse de s'exercer sur l'élément mobile 2, celui-ci peut être rappelé dans sa position de repos et donc la jupe 6 rentrer à l'intérieur du premier logement 5. L'élément élastique 8 est avantageusement agencé entre la première butée 10 et le premier épaulement 9.

L'élément élastique 8 permet ainsi de limiter le phénomène d'usure de la jupe 6 lors des phases de perçage de la tôle qui précèdent généralement les phases de découpe. En effet le perçage est le plus souvent opéré avec de faibles pressions de gaz, typiquement moins de 4 bar. L'élément élastique exerce alors une force de rappel suffisante pour que la jupe 6 remonte totalement ou quasi-totalement dans le premier logement 5 et soit ainsi protégée des projections de métal fondu générées par le perçage.

En outre, l'élément élastique 8 facilite les déplacements rapides de la tête de découpe à faible distance au-dessus de la tôle, sans gaz de coupe ni faisceau, puisque la pression gazeuse cesse alors de s'exercer sur l'élément mobile et la jupe 6 rentre à l'intérieur du premier logement 5. Seule la jupe 6 remonte et il n'est pas nécessaire de relever la tête de focalisation supportant la buse.

De plus, l'élément élastique 8 permet de limiter la pression exercée par l'élément mobile 2 sur la pièce à couper lorsque celui-ci se déplace en direction de la pièce sous l'effet du gaz de coupe. Plus précisément, la force de rappel de l'élément élastique 8 est avantageusement dimensionnée de manière à maintenir l'élément mobile 2 au contact de la pièce à couper tout en limitant la pression que ledit élément exerce sur la tôle, pour minimiser grandement, voire éliminer, tout risque de déformation de la tôle dans laquelle la pièce est découpée, de rayures de la surface de la tôle, et d'entraînement de la tôle.

Selon le cas, l'élément mobile 2 peut comprendre une partie avant 2a de forme cylindrique, c'est-à-dire de diamètre externe constant le long de l'axe AA, ou une portion d'extrémité conformée pour passer sur un dénivelé ou un obstacle sans ou avec un choc grandement réduit au niveau de la jupe 6.

Avantageusement, la partie avant 2a comprend une portion d'extrémité dont le diamètre externe diminue progressivement en direction du deuxième orifice de sortie 12. De la sorte, la partie avant 2a est conformée pour faciliter son passage sur des reliefs ou obstacles présents à la surface de la tôle. Les chocs sont mieux absorbés car la diminution progressive du diamètre externe de la portion d'extrémité favorise la remontée de la jupe 6 vers le logement 5 lorsque la jupe 6 rencontre un dénivelé ou sur un obstacle ponctuel.

Par portion d'extrémité, on entend une portion de la partie avant 2a située à l'extrémité de ladite partie avant, c'est-à-dire en regard de la surface supérieure de la tôle à couper.

Dans un autre mode de réalisation de l'invention, la portion d'extrémité comprend au moins un chanfrein formant un angle α par rapport à la face avant 1a du corps de buse 1. L'angle α du chanfrein est compris entre 0,1 et 80°, de préférence entre 10 et 45°.

Dans un autre mode de réalisation, illustré sur la Figure 2A, le profil externe de la portion d'extrémité comprend au moins une portion de forme curviligne. De préférence, le profil externe de la portion d'extrémité comprend au moins une portion de forme convexe. Le rayon de courbure de la au moins une portion de forme convexe est typiquement compris entre 0,1 et 2 mm.

Optionnellement, au moins un élément d'étanchéité, par exemple un joint élastomère, est agencé entre le corps de buse 1 et l'élément mobile 2, en particulier un ou plusieurs joints toriques, ce qui permet d'assurer une étanchéité entre le corps de buse 1 et l'insert mobile 2. De préférence, ledit au moins un élément d'étanchéité est agencé dans une gorge périphérique aménagée dans la paroi périphérique externe de l'élément mobile 2.

Comme on le voit sur la Figure 2A, la buse de l'invention est d'encombrement standard, c'est-à-dire que son encombrement n'est pas augmenté par rapport à une buse de coupe classique, ce qui est avantageux et compatible pour les découpes par imbrication, c'est-à-dire de pièces au sein d'une même tôle avec très peu d'écart entre les différentes pièces.

En fait, l'élément mobile 2 de la buse selon l'invention est donc apte à se déplacer entre plusieurs positions comprenant au moins:
- une position de repos dans laquelle la jupe 6 de la partie avant 2a est totalement ou quasi-totalement rentrée dans le logement axial 5 du corps de buse 1, comme illustré en Figure 4A, et
- une position de travail dans laquelle la jupe 6 de la partie avant 2a fait totalement ou quasi-totalement saillie à l'extérieur du premier logement axial 5 du corps de buse 1, au travers du premier orifice de sortie 11, et vient au contact de la pièce 30 à couper, comme illustré en Figure 4B.

Bien entendu, l'élément mobile 2 peut occuper des positions intermédiaires dans lesquelles la jupe 6 ne fait que partiellement saillie à l'extérieur du premier logement axial 5 du corps de buse 1. Ces positions intermédiaires peuvent être notamment fonction de la pression exercée par le gaz sur l'élément mobile 2.

La solution de la présente invention conduit ainsi à une buse à élément mobile avec une robustesse, une durée de vie et une mise en oeuvre au plan industriel améliorées par rapport à une buse selon le document FR n°1154224.

### Exemples

Afin de montrer l'efficacité de la buse selon l'invention par rapport à une buse standard, c'est-à-dire une buse classique sans élément mobile, et donc l'intérêt de forcer le gaz dans la saignée de coupe grâce à la mise en oeuvre d'une jupe montée sur un élément mobile, on réalisé des essais comparatifs en utilisant une installation de coupage avec générateur laser de type CO₂ pour généré un faisceau laser qui est amené à une tête de focalisation laser comprenant des optiques de focalisation, à savoir des lentilles.

La tête de focalisation laser est équipée, selon le cas, d'une buse standard avec orifice de sortie de 1,8 mm ou d'une buse selon la Figure 2 avec jupe mobile cylindrique en acier, corps en céramique technique et passage axial de profil conique avec canal de sortie cylindrique d'un diamètre de 1,8 mm de diamètre. En outre, la buse comprend une coiffe externe en cuivre. Au cours de cet essai, le capteur capacitif était paramétré pour ajuster la distance entre la face avant de la coiffe et la surface supérieure de la tôle à couper à une distance de 1 mm.

Le gaz d'assistance utilisé est de l'azote.

La tôle à couper est en acier inoxydable 304 L de 5 mm d'épaisseur.

Le faisceau laser à une puissance de 4 kW et la vitesse de coupe est de 2,6 m/min

Les résultats obtenus ont montré que :
- avec la buse standard, une pression du gaz de 14 bar est insuffisante pour obtenir une coupe de qualité. En effet, à 14 bar, les bords de coupe comportent de nombreuses bavures adhérentes. Ceci démontre que l'évacuation du métal en fusion se fait mal du fait d'une action insuffisante du gaz sur le métal en fusion devant être expulsé. Afin d'éliminer ces bavures, une pression de 16 bar a été nécessaire.
- avec la buse de l'invention, des essais faits à des pressions s'échelonnant entre 1 et 5 bar ont conduit à des coupes de bonne qualité, c'est-à-dire à des bords de coupe dépourvus de bavures adhérentes. La jupe de la buse permet de canaliser le gaz dans la saignée et d'expulser efficacement le métal fondu. En outre, la buse autorise un fonctionnement du capteur capacitif et un maintien de la tête à une hauteur constante par rapport à la surface supérieure de la tôle découpée.

Ces essais démontrent clairement l'efficacité d'une buse selon l'invention qui permet de réduire considérablement les pressions de gaz à mettre en oeuvre par rapport à une buse standard, toutes conditions étant égales par ailleurs, et donc de réduire également les consommations gazeuses. En outre, le fonctionnement de l'installation de découpe laser existante n'est aucunement perturbé par l'emploi de la buse de l'invention. Il est aisé de maintenir une hauteur constante de la tête de focalisation par rapport à la surface supérieure de la tôle à couper en mesurant des valeurs de capacités électriques entre la coiffe externe de la buse et la tôle et en ajustant le positionnement en hauteur de la tête en fonction d'éventuelles variations desdites valeurs.

## Revendications

1. Buse laser comprenant :
- un corps (1) de buse comprenant un premier logement axial (5) comprenant un premier orifice de sortie (11) situé au niveau d'une face avant (1a) du corps de buse (1), et
- un élément mobile (2) agencé dans le premier logement axial (5) du corps de buse (1), comprenant une partie avant (2a) formant jupe et un passage axial (4) avec un deuxième orifice de sortie (12) débouchant au niveau de ladite partie avant (2a) formant jupe, et
- un élément élastique (8) agencé dans le premier logement axial (5), entre le corps (1) de buse et l'élément mobile (2),
**caractérisée en ce que**
- l'élément mobile (2) est apte à se déplacer en translation dans le premier logement axial (5) en direction du premier orifice de sortie (11) sous l'effet d'une pression gazeuse s'exerçant sur l'élément mobile (2),
- l'élément élastique (8) exerce une force de rappel élastique sur l'élément mobile (2) tendant à s'opposer au mouvement de translation dans le premier logement axial (5) en direction du premier orifice de sortie (11), et
- une coiffe externe (13) forme manchon autour de tout ou partie du corps (1) de buse.

2. Buse selon la revendication précédente, **caractérisée en ce que** la coiffe externe (13) comprend une première paroi périphérique (13c) et le corps (1) de buse comprend une deuxième paroi périphérique (1c), les dites première et deuxième parois périphériques (13c, 1c) étant en tout ou partie en contact ou espacées l'une de l'autre.

3. Buse selon l'une des revendications précédentes, **caractérisée en ce que** l'élément mobile (2) est apte à se déplacer en translation dans le premier logement axial (5) en direction du premier orifice de sortie (11) jusqu'à ce que la partie avant (2a) fasse saillie à l'extérieur dudit premier logement axial (5) au travers du premier orifice de sortie (11).

4. Buse selon l'une des revendications précédentes, **caractérisée en ce que** la coiffe externe (13) comprend un deuxième logement axial (7) comprenant un troisième orifice de sortie (14) situé au niveau d'une face avant (13a) de ladite coiffe externe (13), ledit troisième orifice de sortie (14) débouchant en amont dudit deuxième orifice de sortie (12) du passage axial (4) de l'élément mobile (2) lorsque la partie avant (2a) fait saillie à l'extérieur du premier logement axial (5).

5. Buse selon l'une des revendications précédentes, **caractérisée en ce que** le corps (1) de buse est formé d'un matériau isolant électriquement et la coiffe externe (13) est formé d'un matériau conducteur électriquement.

6. Buse selon l'une des revendications précédentes, **caractérisée en ce que** l'élément mobile (2) est apte à se déplacer entre plusieurs positions comprenant :
- une position de repos dans laquelle la partie avant (2a) de l'élément mobile (2) est totalement ou quasi-totalement rentrée dans le logement axial (5), et
- une position de travail dans laquelle la jupe de la partie avant (2a) de l'élément mobile (2) fait totalement ou quasi-totalement saillie à l'extérieur du logement axial (5), au travers du premier orifice de sortie (11).

7. Tête de focalisation laser comprenant au moins une optique de focalisation, **caractérisée en ce qu'**elle comporte en outre une buse laser selon l'une des revendications précédentes.

8. Tête de focalisation selon la revendication 7, **caractérisée en ce qu'**elle comporte en outre un système de capteur capacitif, la coiffe externe (13) de la buse étant reliée électriquement audit système de capteur capacitif.

9. Installation laser comprenant un générateur laser, une tête de focalisation laser et un dispositif de convoyage de faisceau laser relié audit générateur laser et à ladite tête de focalisation laser, **caractérisée en ce que** la tête de focalisation laser est selon l'une des revendications 7 ou 8.

10. Installation selon la revendication 9, **caractérisée en ce que** le générateur laser est de type CO₂, YAG, à fibres ou à disques.

11. Procédé de coupage par faisceau laser d'une pièce métallique (30), dans lequel on met en oeuvre une buse selon l'une des revendications 1 à 6, une tête de focalisation laser selon l'une des revendications 7 ou 8 ou une installation selon l'une des revendications 9 ou 10.

12. Procédé selon la revendication 11, **caractérisée en ce que** la distance entre la pièce métallique (30) coupée et la tête de focalisation est ajustée à partir d'une ou plusieurs valeurs de capacité électrique mesurées entre la coiffe externe (13) et la pièce métallique (30).

## Patentansprüche

1. Laserdüse, umfassend:
- einen Düsenkörper (1), umfassend eine erste axiale Aufnahme (5), umfassend eine erste Ausgangsöffnung (11), die sich auf der Ebene einer vorderen Seite (1a) des Düsenkörpers (1) befindet, und
- ein bewegliches Element (2), das in der ersten axialen Aufnahme (5) des Düsenkörpers (1) angeordnet ist, umfassend einen vorderen Teil (2a), der einen Mantel bildet und einen axialen Durchgang (4) mit einer zweiten Ausgangsöffnung (12), die auf der Ebene des vorderen Teils (2a), der einen Mantel bildet, mündet, und
- ein elastisches Element (8), das in der ersten axialen Aufnahme (5) zwischen dem Düsenkörper (1) und dem beweglichen Element (2) angeordnet ist,
**dadurch gekennzeichnet, dass**
- das bewegliche Element (2) ausgelegt ist, um sich in Translation in der ersten axialen Aufnahme (5) in Richtung der ersten Ausgangsöffnung (11) unter der Wirkung eines gasförmigen Drucks, der auf das bewegliche Element (2) ausgeübt wird, zu verschieben,
- das elastische Element (8) eine elastische Rückstellkraft auf das bewegliche Element (2) ausübt, die dazu neigt, sich der Translationsbewegung in der ersten axialen Aufnahme (5) in Richtung der ersten Ausgangsöffnung (11) entgegenzusetzen, und
- eine äußere Abdeckung (13) eine Muffe um den gesamten oder einen Teil des Düsenkörpers (1) bildet.

2. Düse nach dem vorhergehenden Anspruch, **dadurch gekennzeichnet, dass** die äußere Abdeckung (13) eine erste periphere Wand (13c) und der Düsenkörper (1) eine zweite periphere Wand (1c) umfasst, wobei die erste und zweite periphere Wand (13c, 1c) ganz oder teilweise miteinander in Kontakt oder voneinander beabstandet sind.

3. Düse nach einem der vorhergehenden Ansprüche, **dadurch gekennzeichnet, dass** das bewegliche Element (2) ausgelegt ist, um sich in Translation in der ersten axialen Aufnahme (5) in Richtung der ersten Ausgangsöffnung (11) zu verschieben, bis der vordere Teil (2a) in die Außenseite der ersten axialen Aufnahme (5) durch die erste Ausgangsöffnung (11) hervorsteht.

4. Düse nach einem der vorhergehenden Ansprüche, **dadurch gekennzeichnet, dass** die äußere Abdeckung (13) eine zweite axiale Aufnahme (7) umfasst, umfassend eine dritte Ausgangsöffnung (14), die sich auf der Ebene einer vorderen Seite (13a) der äußeren Abdeckung (13) befindet, wobei die dritte Ausgangsöffnung (14) vorgelagert von der zweiten Ausgangsöffnung (12) des axialen Durchgangs (4) des beweglichen Elements (2) mündet, wenn der vordere Teil (2a) in die Außenseite der ersten axialen Aufnahme (5) hervorsteht.

5. Düse nach einem der vorhergehenden Ansprüche, **dadurch gekennzeichnet, dass** der Düsenkörper (1) aus einem elektrisch isolierenden Material gebildet ist und die äußere Abdeckung (13) aus einem elektrisch leitenden Material gebildet ist.

6. Düse nach einem der vorhergehenden Ansprüche, **dadurch gekennzeichnet, dass** das bewegliche Element (2) ausgelegt ist, um sich zwischen mehreren Positionen zu verschieben, umfassend:
- eine Ruheposition, in der der vordere Teil (2a) des beweglichen Elements (2) vollständig oder fast vollständig in die axiale Aufnahme (5) zurückgezogen ist, und
- eine Betriebsposition, in der der Mantel des vorderen Teils (2a) des beweglichen Elements (2) vollständig oder fast vollständig in die Außenseite der axialen Aufnahme (5) durch die erste Ausgangsöffnung (11) hervorspringt.

7. Laserfokussierungskopf, umfassend mindestens eine Fokussierungsoptik, **dadurch gekennzeichnet, dass** er außerdem eine Laserdüse nach einem der vorhergehenden Ansprüche umfasst.

8. Fokussierungskopf nach Anspruch 7, **dadurch gekennzeichnet, dass** er außerdem ein kapazitives Sensorsystem umfasst, wobei die äußere Abdeckung (13) der Düse elektrisch mit dem kapazitiven Sensorsystem verbunden ist.

9. Laseranlage, umfassend einen Lasergenerator, einen Laserfokussierungskopf und eine Laserstrahl-Fördervorrichtung, verbunden mit dem Lasergenerator und mit dem Laserfokussierungskopf, **dadurch gekennzeichnet, dass** der Laserfokussierungskopf nach einem der Ansprüche 7 oder 8 ist.

10. Anlage nach Anspruch 9, **dadurch gekennzeichnet, dass** der Lasergenerator vom Typ CO₂, YAG, mit Fasern oder mit Scheiben ist.

11. Verfahren zum Schneiden durch Laserstrahl eines Metallstücks (30), wobei eine Düse nach einem der Ansprüche 1 bis 6, ein Laserfokussierungskopf nach einem der Ansprüche 7 oder 8 oder eine Anlage nach einem der Ansprüche 9 oder 10 ausgeführt wird.

12. Verfahren nach Anspruch 11, **dadurch gekennzeichnet, dass** der Abstand zwischen dem geschnittenen Metallstück (30) und dem Fokussierungskopf auf der Grundlage von einem oder mehreren Werten der elektrischen Kapazität eingestellt ist, gemessen zwischen der äußeren Abdeckung (13) und dem Metallstück (30).

## Claims

1. Laser nozzle comprising:
- a nozzle body (1) comprising a first axial housing (5) comprising a first exit orifice (11) situated at a front face (1a) of the nozzle body (1), and
- a movable element (2) arranged in the first axial housing (5) of the nozzle body (1), comprising a front part (2a) forming a skirt and an axial passage (4) with a second exit orifice (12) emerging at said front part (2a) forming a skirt, and
- an elastic element (8) arranged in the first axial housing (5), between the nozzle body (1) and the movable element (2),
**characterised in that**
- the movable element (2) is able to move in translation in the first axial housing (5) in the direction of the first exit orifice (11) under the effect of a gas pressure exerted on the movable element (2),
- the elastic element (8) exerts an elastic return force on the movable element (2) tending to oppose the translation movement in the first axial housing (5) in the direction of the first exit orifice (11), and
- an external cover (13) forms a sleeve around all or part of the nozzle body (1).

2. Nozzle according to the preceding claim, **characterised in that** the external cover (13) comprises a first peripheral wall (13c) and the nozzle body (1) comprises a second peripheral wall (1c), said first and second peripheral walls (13c, 1c) being wholly or partly in contact or spaced apart from each other.

3. Nozzle according to one of the preceding claims, **characterised in that** the movable element (2) is able to move in translation in the first axial housing (5) in the direction of the first exit orifice (11) until the front part (2a) projects outside said first axial housing (5) through the first exit orifice (11).

4. Nozzle according to one of the preceding claims, **characterised in that** the external cover (13) comprises a second axial housing (7) comprising a third exit orifice (14) situated at a front face (13a) of said external cover (13), said third exit orifice (14) emerging upstream of said second exit orifice (12) of the axial passage (4) of the movable element (2) when the front part (2a) projects outside the first axial housing (5)

5. Nozzle according to one of the preceding claims, **characterised in that** the nozzle body (1) is formed from an electrically insulating material and the external cover (13) is formed from an electrically conductive material.

6. Nozzle according to one of the preceding claims, **characterised in that** the movable element (2) is able to move between a plurality of positions comprising:
- an idle position in which the front part (2a) of the movable element (2) is completely or almost completely retracted in the axial housing (5), and
- a working position in which the skirt of the front part (2a) of the movable element (2) completely or almost completely projects outside the axial housing (5), through the first exit orifice (1).

7. Laser focusing head comprising at least one focusing lens, **characterised in that** it also comprises a laser nozzle according to one of the preceding claims.

8. Focusing head according to claim 7, **characterised in that** it also comprises a capacitive sensor system, the external cover (13) of the nozzle being electrically connected to said capacitive sensor system.

9. Laser installation comprising a laser generator, a laser focusing head and a laser beam conveying device connected to said laser generator and to said focusing head, **characterised in that** the laser focusing head is in accordance one of claims 7 or 8.

10. Installation according claim 9, **characterised in that** the laser generator is of the CO₂ or YAG type, with fibres or discs.

11. Method for the laser-beam cutting of a metal part (30), in which use is made of a nozzle according to one of claims 1 to 6, a laser focusing head according to one of claims 7 or 8 or an installation according to one of claims 9 or 10.

12. Method according to claim 11, **characterised in that** the distance between the metal part (30) being cut and the focusing head is adjusted using one or more electrical capacitance values measured between the external cover (13) and the metal part (30).
